# EUROPEAN PATENT SPECIFICATION

(11) **EP 2 022 346 B1**
(45) Date of publication and mention of the grant of the patent: **14.11.2012**
(21) Application number: 07737168.0
(22) Date of filing: 14.05.2007
(51) Int. Cl.: A23L 2/52, A23F 3/16, A23L 2/00, A23L 2/42

(54) **BEVERAGE PACKED IN CONTAINER**
IN BEHÄLTNIS ABGEPACKTES GETRÄNK
BOISSON CONDITIONNÉE EN RÉCIPIENT

(30) Priority: 16.05.2006 JP 2006137007; 08.02.2007 JP 2007029017
(43) Date of publication of application: 11.02.2009
(73) Proprietor: Kao Corporation, Chuo-ku Tokyo 103-8210 (JP)
(72) Inventor: SATAKE, Norihiko, Sumida-ku, Tokyo 131-8501 (JP); IWASAKI, Masaki, Sumida-ku, Tokyo 131-8501 (JP); UCHIDA, Hiroko, Sumida-ku, Tokyo 131-8501 (JP); HOSOYA, Naoki, Sumida-ku, Tokyo 131-8501 (JP); MORIYA, Naoko, Sumida-ku, Tokyo 131-8501 (JP)
(74) Representative: HOFFMANN EITLE
(86) International application number: PCT/JP2007/000512
(87) International publication number: WO 2007/132562

(56) References cited:
- EP-A1- 2 008 525
- JP-A- 2003 169 641
- US-A1- 2003 096 050
- DATABASE WPI Week 200479 Thomson Scientific, London, GB; AN 2004-801231 XP002557472 & JP 2004 321105 A (KAO CORP) 18 November 2004 (2004-11-18)

## Description

### Field of the Invention

The present invention relates to a packaged beverage containing a high concentration of non-polymer catechins, which is excellent in flavor, color tone and the storage stability of non-polymer catechins.

### Background of the Invention

Catechins are reported to have an inhibitory effect on α-amylase activity as one of the effects thereof (e.g., Patent Document 1). For such a physiological effect to emerge, it is necessary for catechins to be ingested more conveniently in large amounts. So there has been a demand for a technique making it possible for a high concentration of catechins to be added to a beverage.

Among such techniques is a method which involves utilizing a tea extract such as a green tea extract concentrate to add catechins in a dissolved state to a beverage. However, the persisting bitterness and persisting astringency intrinsic to caffeine and green tea are known to pose a great damage to the commercial value of a beverage, for example, when catechins are added to a black tea extract liquid or carbonated beverage.

It has long been known that the extract liquid of a fermented tea (e.g., black tea) can be treated with tannase to suppress its suspension, i.e., tea cream formation, during low-temperature cooling. Gallate-type catechins responsible for bitterness can also be reduced according to a method for obtaining a mixture of catechins and gallic acid by treating the gallate-type catechins with tannase to convert part or all thereof to gallic acid, as described in Patent Document 1. An adsorption method (Patent Documents 2 to 4), an extraction method (Patent Document 5), and other methods are also known to have the ability to remove contaminants such as caffeine from a tea extract.

Patent Document 6 concerns a packaged beverage making use of various tea extracts as catechin sources. Among the compositions claimed is a packaged beverage having a gallate ratio of at least 45 wt.%, 0.01mg/100mL or more of gallic acid and 0.092 to 0.5g/100mL of non-polymer catechins.

Patent Document 7 concerns a food product comprising non-polymer catechins and gallic acid. The products make use of tea leaves which are subjected to a tannase treatment. Catechins in the food product are included in an amount of at least 200ppm, and the ratio of gallic acid to the total amount of catechins and gallic acid is 0.08 to 0.6.

Patent Document 8 concerns a process for producing a purified green tea extract and also describes a packaged beverage comprising the extract and which is characterized by a non-polymer catechin content of 0.03 to 1.0 wt.% and a gallate content of the non-polymer catechins of 0-63 wt.%.

Patent Document 9 describes a green tea extract treated with tannase which includes 20-40 wt. % of non-polymer catechins, and gallates are contained in the non-polymer catechins in an amount of 40-60 wt. %, and which is used to prepare a beverage comprising 0.05-0.5 wt.% of non-polymer catechins.
Patent Document 1: JP-A-2003-33157
Patent Document 2: JP-A-05-153910
Patent Document 3: JP-A-08-109178
Patent Document 4: JP-A-2002-335911
Patent Document 5: JP-A-01-289447
Patent Document 6: EP-A-1297757
Patent Document 7: US-A-20030096050
Patent Document 8: EP-A-2008525, published on 31.12.08
Patent Document 9: JP-A-2004321105

### Summary of the Invention

The present invention provides a packaged non-tea beverage, including a purified green tea extract having a ratio of gallate-type catechins in non-polymer catechins of less than 50% by mass, and containing
(A) 0.072 to 1.2% by mass of non-polymer catechins and
(B) 0.1 to 9 mg/100 mL of gallic acid.

### Illustrative Embodiments of the Invention

A mixture of catechins and gallic acid obtained by tannase treatment has a problem that could cause acid taste and harsh taste alike, so that it has been impossible to add such a mixture to a non-tea beverage like an acidic beverage or a sports drink. In addition, when a green tea extract containing a large amount of gallate-type catechins is used in a beverage having a higher concentration of non-polymer catechins, the color tone and flavor of the beverage tends to change due to its long-term storage and therefore is thought to be unsuitable as a beverage packaged in a transparent container.
Accordingly, the present invention provides a non-tea beverage packaged in a transparent container, which shows suppressed bitterness despite a high concentration of non-polymer catechins, and causes no change in the flavor, color tone and non-polymer catechins content of the beverage even when stored for a long period of time.

The present inventors have found that in producing a packaged non-tea beverage using a purified green tea extract whose ratio of gallate-type catechins is adjusted to less than 50% by mass, adjustment of the gallic acid content to 0.1 to 9 mg/100 mL can provide a packaged beverage, which not only shows suppressed bitterness even when having a high concentration of non-polymer catechins but also causes no change in the flavor, color tone and catechins content thereof during long-term storage.

The non-tea beverage packaged in a transparent container according to the present invention contains non-polymer catechins in an amount sufficient to exert its physiological effect, is easy to drink even in the form of an acidic beverage or a sports drink thanks to reduced bitterness, and is excellent in stability in the sense that it produces no change in the flavor, color tone and non-polymer catechins content even when stored for a long period of time.

The term "non-polymer catechins" as used herein is a generic term applied to non-epi-type catechins such as catechin, gallocatechin, catechin gallate, and gallocatechin gallate and epi-type catechins such as epicatechin, epigallocatechin, epicatechin gallate, and epigallocatechin gallate.

The term "gallate-type catechins," as used herein is a generic term applied to catechin gallate, gallocatechin gallate, epicatechin gallate, epigallocatechin gallate, and the like. The term "ratio of gallate-type catechins used herein denotes a percent ratio of the mass sum of four non-polymer gallate-type catechins to the mass sum of catechin, gallocatechin, catechin gallate, gallocatechin gallate, epicatechin, epigallocatechin, epicatechin gallate, and epigallocatechin gallate.
The term "gallo-type catechins" is a generic term applied to gallocatechin, gallocatechin gallate, epigallocatechin, and epigallocatechin gallate.

The packaged beverage according to the present invention is obtained by blending a purified green tea extract having a ratio of gallate-type catechins in non-polymer catechins of less than 50% by mass. The purified green tea extract is preferably subjected to tannase treatment in any stage of the purification process of the green tea extract to adjust the ratio of gallate-type catechins to less than 50% by mass.

The tea extracts used in the present invention include an extract liquid obtained from green tea leaves. More specifically, the tea leaves used in the present invention include tea leaves obtained, for example, from tea leaves of the Genus Camellia, e.g., C. sinensis and C. assamica, and the Yabukita variety or hybrids thereof. The tea leaves thus obtained include green teas such as sencha (middle-grade green tea), bancha (coarse green tea), gyokuro (shaded green tea), tencha (powdered tea) and kamairicha (roasted tea). Preferred examples of the green tea extract used in the present invention include a dried, concentrated product of an extract liquid obtained from green tea leaves.

The extraction from tea leaves is performed by stirring extraction using water as an extraction solvent. In the extraction, an organic salt such as sodium ascorbate or an organic acid may be added to the water in advance. The extraction may be performed in combination with a method which involves effecting extraction while removing dissolved oxygen by degassing by boiling or ventilating an inert gas such as nitrogen gas, i.e., in a so-called non-oxidative atmosphere. The extract liquid thus obtained is dried or concentrated to provide a tea extract used for the present invention. Forms of the tea extract include liquid, slurry, semisolid and solid forms.

The green tea extract may be an extract obtained by extraction using tea leaves subjected to contact treatment with carbon dioxide in a supercritical state.

As a green tea extract used for the present invention, a concentrate of a green tea extract dissolved or diluted in water or a combination of an extract liquid from green tea leaves and a concentrate of a green tea extract may be used instead of employing a dried or concentrated extract liquid obtained from tea leaves.
Here, the concentrate of a green tea extract is that obtained by extracting tea leaves with hot water or a water-soluble organic solvent and simply concentrating the resultant extract, and refers to, for example, that prepared by a method as described in JP-A-59-219384, JP-A-04-20589, JP-A-05-260907, or JP-A-05-306279. The purified green tea extract used may also be commercially available "Polyphenone" from Tokyo Food Techno Co., Ltd., "Teafuran" from Ito En Ltd., "Sunphenone" from Taiyo Kagaku Co., Ltd., or that obtained by further purification treatment using any of the extracts as a raw material.

These green tea extracts or concentrates or purified products thereof are treated with tannase to reduce the ratio of gallate-type catechins. The tannase used here is commercially available tannase preferably having an enzymatic activity of 500 to 5,000 U/g. Not more than 500 U/g cannot provide sufficient activity; not less than 5,000 U/g makes it difficult to control the reaction system because an enzymatic reaction rate is too rapid.
The tannase is suitably tannin acylhydrolase EC3.1.1.20. Commercial products thereof include, as trade names, "Tannase" from Kikkoman Corporation and Tannase "Sankyo" from Sankyo Co., Ltd.

The specific procedure for tannase treatment preferably involves adding tannase to an aqueous solution of a green tea extract so as to provide a concentration of tannase ranging from 0.5 to 10% by mass based on the non-polymer catechins in the green tea extract, in view of the effect of reducing the ratio of non-polymer gallate-type catechins and the termination of the enzymatic reaction at the optimal ratio of non-polymer gallate-type catechins. The tannase concentration is more preferably 0.5 to 5% by mass, more preferably 2 to 4% by mass.
The temperature required for this tannase treatment is preferably 15 to 40°C at which the optimal enzymatic activity is obtained, more preferably 20 to 30°C.

In order to terminate the tannase reaction, it is necessary to inactivate the enzyme activity. The enzyme inactivation temperature is preferably 70 to 90°C. The temperature is also preferably kept for 10 seconds (inclusive) to 20 minutes (inclusive) after reaching a predetermined inactivation temperature. The method for inactivating the enzyme reaction can involve terminating the reaction by heating by a batch method or a continuous system such as a plate-type heat exchanger. Following the inactivation treatment of tannase, the aqueous solution of a green tea extract can be cleaned up by an operation (e.g., centrifugation).

The purified green tea extract used in the present invention is also preferably subjected to purification treatment before or after the tannase treatment in view of flavor, stability. Means for such purification treatment include operations such as (1) synthetic adsorbent treatment, (2) extraction with a mixture of an organic solvent and water, (3) activated carbon treatment, (4) activated clay and/or acid clay treatment, and (5) solid-liquid separation, either alone or in a combination thereof.

Examples of the synthetic adsorbent treatment include a method which involves causing the green tea extract to be adsorbed to a synthetic adsorbent and then eluting non-polymer catechins. More specifically, the green tea extract is adsorbed to the synthetic adsorbent; the synthetic adsorbent is washed; and a basic aqueous solution is then allowed to contact therewith to elute non-polymer catechins. The synthetic adsorbent treatment can decrease caffeine and gallic acid. Examples of the synthetic adsorbent to be used include that using styrene-divinylbenzene, modified styrene-divinylbenzene, or methyl methacrylate as a body. Examples of the styrene-divinylbenzene-based synthetic adsorbent include, as trade names, Diaion HP-20 and HP-21 and Sepabeads SP70, SP700, SP825 and SP-825 from Mitsubishi Chemical Corporation; Amberlite XAD4, XAD16HP, XAD1180 and XAD2000 from Organo Corporation; and Duolite S874 and S876 from Sumitomo Chemical Co., Ltd. Examples of the modified styrene-divinylbenzene-based synthetic adsorbent whose adsorption power is enhanced by the nucleus substitution with a bromine atom include, as trade names, Sepabeads SP205, SP206 and SP207 from Mitsubishi Chemical Corporation. Examples of the methyl methacrylate-based synthetic adsorbent include Sepabeads HP 1MG and HP 2MG from Mitsubishi Chemical Corporation, XAD7HP from Organo Corporation, and Duolite S877 from Sumitomo Chemical Co., Ltd.
Among synthetic adsorbents, the modified polystyrene-based synthetic adsorbent and methyl methacrylate-based synthetic adsorbent are preferable.
Specific examples of the synthetic adsorbent include modified polystyrene-based synthetic adsorbents such as SP207 (from Mitsubishi Chemical Corporation) and methacrylate-based synthetic adsorbents such as HP 2MG (from Mitsubishi Chemical Corporation); however, SP207 is preferable.

The column packed with the synthetic adsorbent is preferably subjected to removal of raw monomers in the adsorbent, and impurities from the raw monomers, and the like in advance by washing with a 95% by volume ethanol aqueous solution under liquid-passing conditions of SV (space velocity) = 1 to 10 [h⁻¹] and a volumetric ratio of liquid flow to the synthetic adsorbent of 2 to 10 (v/v). Subsequently, washing with water is performed under liquid-passing conditions of SV = 1 to 10 [h⁻¹] and a volumetric ratio of liquid flow to the synthetic adsorbent of 1 to 10 (v/v) to remove ethanol and replace the liquid contained in the synthetic adsorbent with an aqueous liquid; this procedure enhances the ability thereof to adsorb non-polymer catechins.

Means for causing the green tea extract to be adsorbed to the synthetic adsorbent preferably involves passing the green tea extract aqueous solution through the column packed with the synthetic adsorbent. Conditions under which the green tea extract is passed through the column packed with the synthetic adsorbent are preferably a liquid-passing rate of 0.5 to 10 [h⁻¹] in terms of SV (space velocity) and a volumetric ratio of liquid flow to the synthetic adsorbent of 0.5 to 20 (v/v). A liquid-passing rate of more than 10 [h⁻¹] or a volumetric ratio of more than 20 (v/v) makes the adsorption of non-polymer catechins insufficient.
In addition, a green tea extract is adsorbed to the synthetic adsorbent and then washed with water; the washing is preferably performed under conditions of a liquid-passing rate of SV (space velocity) = 1 to 10 [h⁻¹] and a volumetric ratio of liquid flow to the synthetic adsorbent of 1 to 10 (v/v) to remove the gallic acid and impurities adhering to the synthetic adsorbent. Washing with water at a liquid-passing rate of more than 10 [h⁻¹] or a volumetric ratio of more than 10 (v/v) may result in the elution of non-polymer catechins; a volumetric ratio of less than 1 (v/v) makes the removal of gallic acid insufficient.

As the basic aqueous solution used for the elution of non-polymer catechins, there can be suitably employed, for example, a sodium hydroxide aqueous solution, a sodium carbonate aqueous solution. The alkaline aqueous solution preferably has a pH ranging from 7 to 14. Examples of the sodium-based aqueous solution having a pH of 7 to 14 include a 4%-or less sodium hydroxide aqueous solution and a IN sodium carbonate aqueous solution.

In the elution step, two or more aqueous solutions whose pHs are different from one another can be preferably used as eluents to allow these eluents to contact with the synthetic adsorbent in order of increasing pH thereof. Examples of the use of two or more eluents whose pHs are different from one another include elution with an eluent having a pH of 3 to 7, followed by elution with a basic aqueous solution having a pH of 9 to 11.

The synthetic adsorbent used in the present invention can be reused by employing a predetermined method after purification treatment. Specifically, an alkali aqueous solution such as sodium hydroxide is passed therethrough, followed by washing to desorb all water-soluble components left on the synthetic adsorbent.

The eluate of non-polymer catechins is preferably neutralized in view of the stabilization of the catechins because they have been eluted using a basic aqueous solution. The neutralization method preferably uses a cation exchange resin capable of removing alkali metal ions, particularly an H-type cation exchange resin. Specific examples of the cation exchange resin which may be used include Amberlite 200CT, IR120B, IR124 and IR118 and Diaion SK1B, SK102, PK208 and PK212.

In addition to the above purification treatments, the (1) extraction with a mixture of an organic solvent and water and (2) activated carbon treatment, or the (1) extraction with a mixture of an organic solvent and water and (3) activated clay and/or acid clay treatment are preferably performed in combination. In addition, the combined performance of the (1) extraction with a mixture of an organic solvent and water, (2) activated carbon treatment and (3) activated clay and/or acid clay treatment is more preferable.

For the extraction with a mixture of an organic solvent and water, the green tea extract is dispersed in the mixture of an organic solvent and water. It is preferable that the mass content ratio of the organic solvent to water in the dispersion is finally 60/40 to 97/3, and more preferably (1) 60/40 to 75/25 for the removal of water-insoluble components from tea leaves, such as, for example, celluloses and (2) 85/15 to 95/5 for the removal of flavor components from tea leaves, in view of extraction efficiency for catechins, purification of the tea extract, drinkability over a long period of time.

Examples of the organic solvent include ethanol, methanol, acetone, and ethyl acetate. Among these, the hydrophilic organic solvents such as methanol, ethanol and acetone are preferable, more preferably ethanol in view of use in foods. Examples of the water include ion exchanged water, city water, and natural water. The organic solvent and water may be mixed after mixing or separately with a microfiltrated green tea extract; however, it is preferable that the mixed solution is made and then subjected to mixing treatment with the green tea extract.

A green tea extract is preferably added, for treatment, in an amount of 10 to 40 parts by mass, more preferably 10 to 30 parts by mass, even more preferably 15 to 30 parts by mass (in terms of dry mass) based on 100 parts by mass of the mixture of an organic solvent and water because a green tea extract can be efficiently treated.

A maturing time of about 10 to 180 minutes may be more preferably set after adding the mixture of an organic solvent and water.
These treatments can be carried out at 10 to 60°C, preferably 10 to 50°C, more preferably 10 to 40°C.

The activated carbon used in the activated carbon treatment is not particularly limited provided that it is generally employed in an industrial level; examples thereof which may be used include commercial products such as ZN-50 (from Hokuetsu Carbon Industry Co., Ltd.); Kuraraycoal GLC, Kuraraycoal PK-D, and Kuraraycoal PW-D (Kuraray Chemical Co., Ltd.); and Shirasagi AW50, Shirasagi A, Shirasagi M, and Shirasagi C (Takeda Pharmaceutical Company Limited).
The activated carbon preferably has a pore volume of 0.01 to 0.8 mL/g, more preferably 0.1 to 0.8 mL/g. In addition, it preferably has a specific surface area ranging from 800 to 1,600 m²/g, more preferably from 900 to 1,500 m²/g. These physical properties are values based on the nitrogen adsorption method.

The activated carbon treatment is preferably performed after adding the green tea extract to the mixed solution of an organic solvent and water. The activated carbon is preferably added in an amount of 0.5 to 8 parts by mass, more preferably 0.5 to 3 parts by mass based on 100 parts by mass of the mixed solution of an organic solvent and water in view of a purification effect and reduced cake resistance during the step of filtration.

The acid clay or activated clay contain SiO₂, Al₂O₃, Fe₂O₃, CaO, MgO as general chemical ingredients; however, each clay preferably has a SiO₂/Al₂O₃ ratio of 3 to 12, more preferably 4 to 9. Each clay also preferably has a composition containing 2 to 5% by mass of Fe₂O₃, 0 to 1.5% by mass of CaO, and 1 to 7% by mass of MgO.
Activated clay is a compound obtained by treating a naturally produced acid clay (montmorillonite clay) with a mineral acid such as sulfuric acid and having a porous structure with a large specific surface area and adsorption capacity.

The specific surface area of the acid clay or activated clay varies depending on the extent of acid treatment; however, it is preferably 50 to 350 m²/g. The pH of each clay is preferably 2.5 to 8, more preferably 3.6 to 7 in the form of a 5% by mass suspension. Examples of the acid clay which may be used include commercial products such as Mizuka-Ace #600 (from Mizusawa Industrial Chemicals Ltd.).

The ratio by mass of the acid clay or activated clay when combined with activated carbon is desired to be 1 to 10 to 1 of the activated carbon; the ratio of activated carbon:acid clay or activated clay is preferably 1:1 to 1:6.

The resulting purified green tea extract is preferably clarified to enhance the product stability, if necessary. Specific examples of the operation of clarification include solid-liquid separating the solid and the water-soluble part by filtration and/or centrifugation treatment.

When the solid-liquid separation is performed by the filtration, filtration conditions are preferably a temperature of 5 to 70°C, more preferably 10 to 40°C. The pressure is desired to be within the pressure resistance range of the membrane module to be used; for example, it is preferably 30 to 400 kPa, more preferably 50 to 400 kPa, even more preferably 50 to 350 kPa. The membrane preferably has a pore diameter of 1 to 30 µm, more preferably 2 to 25µm, even more preferably 2 to 20µm in view of providing a predetermined turbidity. Methods for measuring the membrane pore diameter include common measuring methods using a mercury press-in method, a bubble point test, a biological filtration method ; however, values determined by the bubble point test are preferably used.

The centrifuge used is preferably a common apparatus such as disk-type, cylindrical and decanter-type centrifuges. Centrifugation conditions are preferably a temperature of 5 to 70°C, more preferably 10 to 40°C. The revolution speed and time are desired to be conditions controlled so that a predetermined turbidity level is achieved. For example, in the case of the disk-type centrifuge, preferred are 3,000 to 10,000 r/min., more preferably 5,000 to 10,000 r/min., even more preferably 6,000 to 10,000 r/min. and 0.2 to 30 minutes, more preferably 0.2 to 20 minutes, even more preferably 0.2 to 15 minutes.

The solid-liquid separation is preferably performed by membrane filtration. The polymer membrane used for membrane filtration is a hydrocarbon, fluorinated hydrocarbon or sulfone polymer membrane; examples thereof include polyolefin polymer membranes such as polyethylene and polypropylene; and fluorinated polyolefin polymer membranes such as polytetrafluoroethylene (PTFE) and polyvinylidene difluoride (PVDF). Examples thereof also include sulfone polymer membranes such as polysulfone (PSU) and polyethersulfone (PES). The polymer membrane preferably has a membrane pore diameter of 0.05 to 0.8 µm, more preferably 0.05 to 0.5 µm, even more preferably 0.08 to 0.5 µm. Too small a membrane pore diameter markedly reduces the filtration velocity, while too large does not enable separation and deteriorates color tone. The membrane also preferably has a thickness of 0.1 to 2.5 mm, more preferably 0.3 to 2.0 mm, even more preferably 0.3 to 1.5 mm.

The purified green tea extract used in the present invention preferably contains 25 to 95% by mass, more preferably 40 to 90% by mass, still more preferably 50 to 88% by mass, even more preferably 60 to 85% by mass of non-polymer catechins in the solid phase thereof.

The percentage of gallate-type catechins consisting of catechin gallate, epicatechin gallate, gallocatechin gallate and epigallocatechin gallate based on all non-polymer catechins in the purified green tea extract is required to be less than 50% by mass in view of suppressing bitterness; however, it is preferably 0 to 48% by mass, more preferably 0.1 to 45, more preferably 1 to 44, more preferably 2 to 40, more preferably 3 to 39, more preferably 4 to 30, even more preferably 5 to 20% by mass in view of the effectiveness of the physiological effect of non-polymer catechins and the reduction of the bitterness.

When the caffeine concentration in the purified green tea extract used in the present invention is expressed based on the non-polymer catechins, the ratio (by mass) of caffeine/non-polymer catechins is preferably 0 to 0.1, more preferably 0.005 to 0.05, even more preferably 0.01 to 0.035.

In the packaged beverage according to the present invention, non-polymer catechins are contained in an amount of 0.072 to 1.2% by mass, preferably 0.08 to 0.6% by mass, more preferably 0.09 to 0.4% by mass, still more preferably 0.1 to 0.3% by mass. The range of content of non-polymer catechins facilitates the ingestion of a large amount of non-polymer catechins and is also preferable in view of the stability of the flavor, color tone and non-polymer catechins content.

In the packaged beverage according to the present invention, the content of gallic acid is 0.1 to 9 mg/100 mL, preferably 0.5 to 9 mg/100 mL, further particularly 1.1 to 9 mg/100 mL in view of the effect of reducing bitter and acid tastes and further the storage stability of the flavor, color tone and non-polymer catechins content. The content of gallic acid is controlled by adsorption using resin.

The packaged beverage according to the present invention is a non-tea beverage; examples of the non-tea beverage include forms of a carbonated beverage, a noncarbonated beverage, an enhanced water, a bottled water, a sports drink, an energy drink, a near water, an isotonic drink, a hypotonic drink, a hypertonic drink, and a functional beverage.

In the case of the acidic beverage, the content of a sweetener is preferably 0.005 to 20% by mass, more preferably 0.05 to 10% by mass, even more preferably 0.5 to 5% by mass in view of the addition of sweetening. The pH is 2.0 to 6.0, preferably 2.1 to 4.5, more preferably 2.5 to 4.0, even more preferably 3.0 to 3.8.

The sweetener used in the package beverage according to the present invention is an artificial sweetener, a carbohydrate, or a glycerol (e.g., glycerin). Among these, the artificial sweetener is preferably used. The artificial sweetener which may be used in the present invention is a high-intensity sweetener such as saccharin, sodium saccharin, aspartame, acesulfame-K, sucralose, and neotame, or a sugar alcohol such as sorbitol, erythritol, and xylitol. Commercial products thereof include Slim Up Sugar composed of aspartame, Lakanto S containing erythritol, and Pal Sweet composed of erythritol and aspartame.

When the packaged beverage is also intended to have an energy-replenishing function, a carbohydrate sweetener is preferably used.

The term "carbohydrate" as use herein encompasses a monosaccharide, an oligosaccharide, a complex polysaccharide, and a mixture thereof.

The amount of glucose in the packaged beverage according to the present invention is preferably 0.0001 to 20% by mass, more preferably 0.001 to 15% by mass, still more preferably 0.001 to 10% by mass.

The carbohydrate sweetener used in the present invention may be a soluble carbohydrate; examples of the oligosaccharide include carbohydrates generating monosaccharides such as glucose and fructose in the body (i.e., sucrose, maltodextrin, corn syrup, and high fructose corn syrup). Among the saccharides, a disaccharide is preferable. An example of the disaccharide is sucrose known as cane sugar or beet sugar. The amount of sucrose in the packaged beverage according to the present invention is preferably 0.001 to 20% by mass, more preferably 0.001 to 15% by mass, even more preferably 0.001 to 10% by mass.

The flavoring used in the present invention refers to a material defined as "an additive added to impart or enhance aroma during the production or processing of food, or a preparation thereof" in the Food Sanitation Law. The content of the flavoring in the packaged beverage is preferably 0.01 to 5% by mass, more preferably 0.05 to 3% by mass, even more preferably 0.1 to 2% by mass in view of enhancing flavor.
Natural or synthetic flavorings or fruit juices including flavorings and fruit juices may be used in the present invention. These may be selected from a fruit juice, a fruit flavoring, a plant flavoring, and a mixture thereof. Particularly, there is used a combination of a fruit juice and a tea flavoring, preferably a green tea or black tea flavoring. The fruit juice is preferably a juice of apples, pears, lemons, limes, mandarins, grapefruits, cranberries, oranges, strawberries, grapes, kiwi fruits, pineapples, passionfruits, mangos, guavas, raspberries, or cherries. A citrus juice, preferably a grapefruit, orange, lemon, lime or mandarin juice, a mango, passionfruit or guava juice, or a mixture thereof is most preferable. The natural flavoring is preferably jasmine, camomile, rose, peppermint, hawthorn, chrysanthemum, saligot, sugar cane, litchi, bamboo shoot, or the like. The content of the fruit juice in the beverage of the present invention is preferably 0.001 to 20% by mass, more preferably 0.002 to 10% by mass. A fruit flavoring, a plant flavoring, a tea flavoring, or a mixture thereof may also be used as a fruit juice. Specifically, citrus flavorings including orange flavoring, lemon flavoring, lime flavoring and grapefruit flavoring are preferred. In addition to citrus flavorings, various other fruit flavorings such as apple flavoring, grape flavoring, raspberry flavoring, cranberry flavoring, cherry flavoring, and pineapple flavoring may also be used. These flavorings may be derived from natural sources such as a fruit juice and a perfume oil, or synthesized. The flavorings may include various flavoring blends including, for example, a blend of lemon and lime flavorings and a blend of a citrus flavoring and a selected spice.

When the packaged beverage according to the present invention is made in the form of a sports drink or an isotonic drink, it preferably contains sodium ions and/or potassium ions. The sports drink refers to a beverage which can rapidly replenish the water and mineral lost as a sweat after physical exercise.

Among the main physiological electrolytes are sodium and potassium. These ion components can be contained by adding corresponding water-soluble components or inorganic salts. They are also present in a fruit juice and a tea extract. The amount of electrolytes or ion components in the beverage of the present invention is the content thereof in a final drinkable beverage packaged in a container. The electrolyte concentration is expressed as an ion concentration. The potassium ion component may be blended, in the beverage of the present invention, in the form of a salt such as potassium chloride, potassium carbonate, potassium sulfate, potassium acetate, potassium hydrogencarbonate, potassium citrate, potassium phosphate, potassium hydrogenphosphate, potassium tartrate, potassium sorbate, and a mixture thereof, or as a component of the added fruit juice or tea. The content of potassium ions in the packaged beverage according to the present invention is preferably 0.001 to 0.2% by mass, more preferably 0.002 to 0.15% by mass, still more preferably 0.003 to 0.12% by mass. Similarly, the sodium ion component may be blended in the form of a readily available sodium salt such as sodium chloride, sodium carbonate, sodium hydrogencarbonate, sodium citrate, sodium phosphate, sodium hydrogenphosphate, sodium tartrate, sodium benzoate, and a mixture thereof, or as a component of the added fruit juice or tea. The sodium concentration is desirably low in the way of facilitating the absorption of water by osmotic pressure; it is preferably of such a degree that water is not subjected to osmotic suction from the body to the intestine. The concentration of sodium necessary for it is preferably lower than that of the plasma sodium. The content of sodium ions in the packaged beverage according to the present invention is preferably 0.001 to 0.5% by mass, more preferably 0.002 to 0.4% by mass, still more preferably 0.003 to 0.2% by mass. In addition to potassium and sodium ions, chloride ions may be further contained in an amount of 0.001 to 0.5% by mass, preferably 0.002 to 0.4% by mass, more preferably 0.003 to 0.3% by mass in the packaged beverage according to the present invention. The chloride ion component may be blended in the form of a salt such as sodium chloride or potassium chloride. Calcium ions and other trace ions such as magnesium, zinc and iron ions may also be blended. These ions may also be blended in the form of a salt. The total amount of ions present in the beverage includes the amount of added ions and the amount of ions naturally present in the beverage. When sodium chloride is added, for example, the amounts of sodium ions and chloride ions in the sodium chloride thus added are included in the above total amount of ions.
Here, too low concentrations of sodium ions and potassium ions are unfavorable because they do not leave a satisfactory feeling in taste in some situations of drinking and cannot replenish minerals effectively. On the other hand, too high concentrations are also undesirable for long-term drinking because they make stronger the taste of salts per se.

A bitterness- and astringency-relieving agent is preferably blended in the packaged beverage according to the present invention because it makes the beverage easy to drink. The bitterness- and astringency-relieving agent used is preferably, for example, a cyclodextrin. The cyclodextrin which may be used is α-, β- or γ-cyclodextrin or a branched α-, β- or γ-cyclodextrin. In the packaged beverage according to the present invention, there may be blended additives such as an antioxidant, any of various esters, an organic acid, an organic salt, an inorganic acid, an inorganic acid salt, a dye, an emulsifier, a preservative, a flavoring material, a sweetener, an acidulant, a gum, an emulsifier, an oil, a vitamin, an amino acid, a vegetable extract, a nectar extract, a pH adjuster, and a quality stabilizer, alone or in combination.

The packaged beverage of the present invention may further contain an acidulant, if necessary. Examples of the acidulant include edible acids such as malic acid, citric acid, tartaric acid and fumaric acid. The acidulant may also be used to adjust the pH of the beverage of the present invention. The beverage of the present invention preferably has a pH of 2 to 6. As the pH adjuster, an organic or inorganic edible acid may be used. The acid may also be used in a form such as, for example, potassium or sodium hydrogenphosphate or potassium or sodium dihydrogenphosphate. Preferred acids are edible organic acids including citric acid, malic acid, fumaric acid, adipic acid, phosphoric acid, gluconic acid, tartaric acid, ascorbic acid, acetic acid, phosphoric acid, and a mixture thereof. Most preferred acids are citric acid and malic acid. The acidulant is also useful as an antioxidant for stabilizing the components of the beverage. Examples of commonly employed antioxidants which may be blended include ascorbic acid, EDTA (ethylenediaminetetraacetic acid) and salts thereof, and plant extracts.

The packaged beverage of the present invention may further contain vitamins. Vitamin A, vitamin C, and vitamin E are preferably added. Other vitamins such as vitamin D and vitamin B may also be added. Minerals may also be used in the packaged beverage of the present invention. Preferred minerals are calcium, chromium, copper, fluorine, iodine, iron, magnesium, manganese, phosphorus, selenium, silicon, molybdenum, and zinc. More preferred minerals are magnesium, phosphorus and iron.

The packaged beverage according to the present invention is also useful as a beverage packaged in a transparent container because it is excellent in the storage stability of color tone.

The container used for the beverage packaged in a container according to the present invention may be provided in common forms such as a molded container consisting mainly of polyethylene terephthalate (a so-called PET bottle) and a bottle. As used herein, the term "beverage packaged in a container" refers to a beverage which can be drunk without dilution.

The packaged beverage according to the present invention is produced, for example, by packing it in a container, followed by, when it can be subjected to heat sterilization as with the container being a metal can, sterilization under conditions as prescribed in the Food Sanitation Law of Japan. However, in the case of a container incapable of being retort-sterilized, such as a PET bottle and a paper container, a method is adopted which involves, for example, sterilizing the beverage under conditions on a par with the above, for example, at high temperature for a short period of time using a plate type heat exchanger or the like, and then packing it in a container after cooling down to a fixed temperature. Another component may also be charged into the container under sterilization.

### Examples

### Measurement of Non-polymer Catechins

A non-polymer catechins composition was diluted with distilled water, filtered with a filter (0.8 µm), and then measured by a gradient method using solutions A and B at a column temperature of 35°C employing a high performance liquid chromatograph (Model SCL-10AVP) from Shimadzu Corporation, equipped with L-Column TM ODS (4.6 mmφ×250 mm; from Chemicals Evaluation and Research Institute), a packed column for octadecyl-introduced liquid chromatograph. The measurement was performed under conditions of a sample injection volume of 20 µL and a UV detector wavelength of 280 nm using a distilled water solution containing 0.1 mole/L acetic acid as the mobile phase solution A and an acetonitrile solution containing 0.1 mole/L acetic acid as the solution B.

### Measurement of Gallic Acid

The measurement was conducted in a procedure similar to that for the non-polymer catechins using a high performance liquid chromatograph (Model: Shimadzu LC-VP series).

### Flavor Stability Evaluation Method

The initial flavor was defined as 10, and the storage stability of the flavor was evaluated in a storage acceleration test at 55°C.
T he flavor is evaluated on a scale of 10 to 1.
T he acceptance line is set at 5 or more.

### Color Tone Stability Evaluation Method

Color Meter ZE200 from Nippon Denshoku Industries Co., Ltd. was used for the measurement of color tone in a color tone stability evaluation.
The initial color tone was measured, and the change in color tone was evaluated in a storage acceleration test at 55°C.
A difference from the value b on the 0th day of storage was expressed as Δb.
The acceptance line is set at less than 2.5.

### Evaluation Method for Bitterness

Bitterness was evaluated by sensory evaluation (n = 5) using a quinine sulfate aqueous solution as a reference material (JIS Z8144 / Sensory Test Handbook (New Edition) (pp.448-449) 10th issue issued on February 9th, 1990).

### (1) Catechin Preparation Aqueous Solution (A)

A green tea extract having a content of catechins of 30% was subjected to tannase treatment (tannase concentration: 2.0%, reaction temperature: 20°C) and then spray-dried by a spray dry method. The catechins were extracted from the resultant powder using a mixed solvent of ethanol and water (water:ethanol = 15:85). The extract was then purified by adding activated carbon in an amount of 8 parts by mass based on the mixed solution to provide catechin preparation aqueous solution (A). The resultant catechin preparation (purified green tea extract) had a ratio of gallate-type catechins of 44%. The concentration of non-polymer catechins in the solid phase was 71% by mass. The solid phase was 23.2%. The concentration of gallic acid in the solid phase was 3.1%.

### (2) Catechin Preparation Aqueous Solution (B)

A green tea extract having a content of catechins of 30% was subjected to spray drying by a spray dry method without tannase treatment. The catechins were extracted from the resultant powder using a mixed solvent of ethanol and water (water:ethanol = 15:85). The extract was then purified by adding activated carbon in an amount of 8 parts by mass based on the mixed solution to provide catechin preparation aqueous solution (B). The resultant catechin preparation (purified green tea extract) had a ratio of gallate-type catechins of 54%. The concentration of non-polymer catechins in the solid phase was 71% by mass. The solid phase was 23.2%. The concentration of gallic acid in the solid phase was 0.33%.

### (3) Catechin Preparation Aqueous Solution (C)

A green tea extract having a content of catechins of 30% was subjected to tannase treatment (tannase concentration: 2.0%, reaction temperature: 20°C) and then spray-dried by a spray dry method. The resultant powder was dissolved in water. The catechins were adsorbed to a synthetic adsorbent (SP70; Diaion) by adding 1 kg of the synthetic adsorbent to 4 kg of the catechin aqueous solution. The residue of the green tea extract in the synthetic adsorbent was then washed out with water. Through 1 kg of the washed SP70 was passed 10 kg of 0.1% NaOH to elute the catechins into the alkali aqueous solution from the resin. There was used 0.5 kg of an ion exchange resin (SK1BH; Diaion) based on 10 kg of the alkali aqueous solution of catechins to remove Na ions. Then, activated carbon was added in an amount of 8 parts by mass based on the powder for purification to provide catechin preparation aqueous solution (C).
The resultant catechin preparation (purified green tea extract) had a ratio of gallate-type catechins of 6%. The concentration of non-polymer catechins in the solid phase was 80% by mass. The solid phase was 10.1%. The concentration of gallic acid in the solid phase was 0.49%.

### (4) Catechin Preparation Aqueous Solution (D)

A green tea extract having a content of catechins of 30% was subjected to spray drying by a spray dry method without tannase treatment. The resultant powder was diluted with water so that the concentration of catechins is 1%. The catechins were adsorbed to a synthetic adsorbent (SP70; Diaion) by adding 1 kg of the synthetic adsorbent to 4 kg of the catechin aqueous solution. The residue of the green tea extract in the synthetic adsorbent was then washed out with water. There was 1 kg of the washed SP70 with 10 kg of 0.1% NaOH to elute the catechins into the alkali aqueous solution from the resin. There was used 0.5 kg of an ion exchange resin (SK1BH; Diaion) based on 10 kg of the alkali aqueous solution of catechins to remove Na ions. Then, activated carbon was added in an amount of 8 parts by mass based on the powder for purification to provide catechin preparation aqueous solution (D). The resultant catechin preparation (purified green tea extract) had a ratio of gallate-type catechins of 55%. The concentration of non-polymer catechins in the solid phase was 80% by mass. The solid phase was 10.1%. The concentration of gallic acid in the solid phase was 0.18%.

### Example 1 and Comparative Example 1

Acidic beverages (pH: 3.5) were produced according to the recipes described in Table 1. The beverages were each sterilized at 98°C for 30 seconds using an UHT sterilizer and packaged in a transparent PET bottle.

**[Table 1]**

| | | | Example 1 | Comparative Example 1 |
|---|---|---|---|---|
| <Recipe> | | Unit | | |
| Catechin Preparation Aqueous Solution (A) | | % by mass | 0.77 | |
| Catechin Preparation Aqueous Solution (B) | | % by mass | | 0.77 |
| Sweetener | | % by mass | 0.8 | 0.8 |
| Flavoring, Acidulant | | % by mass | 0.5 | 0.5 |
| Common Salt | | % by mass | 0.1 | 0.1 |
| Fruit Juice | | % by mass | 0.1 | 0.1 |
| Cyclic Oligosaccharide | | % by mass | 0.1 | 0.1 |
| Ion-exchange Water | | % by mass | Balance | Balance |
| Total Amount | | % by mass | 100 | 100 |
| <Analytical Value> | | | | |
| Concentration of Non-polymer Catechins in Beverage | | mg/100ml | 127 | 127 |
| Concentration of Non-polymer Catechins in Beverage | | % by mass | 0.127 | 0.127 |
| Ratio of Gallate-type Catechins in Non-polymer Catechins | | % by mass | 44 | 54 |
| Concentration of Gallic Acid in Beverage | | mg/100ml | 5.5 | 0.6 |
| Bitterness Evaluation | | | 6.5 | 6.8 |

| <Flavor Stability Evaluation> | | | | |
|---|---|---|---|---|
| | 0th Day of Storage at 55°C | | 10 | 10 |
| | 3th Day of Storage at 55°C | | 9.4 | 6 |
| | 5th Day of Storage at 55°C | | 7.8 | 4.3 |
| | 6th Day of Storage at 55°C | | 6.8 | 3.2 |

| <Color Tone Stability Evaluation (Δb)> | | | | |
|---|---|---|---|---|
| | 0th Day of Storage at 55°C | | 0.0 | 0.0 |
| | 3th Day of Storage at 55°C | | 0.1 i | 1.5 |
| | 5th Day of Storage at 55°C | | 0.5 | 2.0 |
| | 6th Day of Storage at 55°C | | 0.8 | 3.2 |

As shown in Table 1, it has been found that the beverage having a ratio of gallate-type catechins of more than 50% by mass had bitterness and the storage of the beverage changed the flavor and color tone thereof. In contrast, it has been shown that the beverage adjusted to a ratio of gallate-type catechins of less than 50% by mass according to the present invention had reduced bitterness and even the storage of the beverages less easily changed the flavor and color tone thereof.

### Example 2 and Comparative Example 2

Acidic beverages were produced by the same way as in Example 1 and Comparative Example 1. The beverages were each sterilized at 98°C for 30 seconds using an UHT sterilizer and packaged in a transparent PET bottle (350 mL). The resultant each packaged beverage was stored at 55°C for 6 days, and the amount of non-polymer catechins in the beverage was measured with the passage of days. The results are shown in Table 2.

**[Table 2]**

| Attributes | | Example 2 | | Comparative Example 2 |
|---|---|---|---|---|
| pH | | 3.4 | | 3.4 |
| Recipe | | Table 1 | | Table 1 |
| Storage Form | | 350 mL PET | | 350 mL PET |
| Type of Catechin Preparation | | A=100 | | B=100 |
| Concentration of Catechins (mg/100 mL) | | 130 | | 130 |
| Ratio of Gallate-type Catechins (%) | | 44 | | 54 |
| Amount of Gallic Acid (%) | | 5.6 | | 0.6 |
| Storage Conditions | Residual Amount of Catechins in Beverage (%) | Initial | 100.0 | 100.0 |
| | | 55°C, Day 2 | 97.6 | 95.7 |
| | | 55°C, Day 3 | 95.7 | 94.6 |
| | | 55°C, Day 6 | 95.2 | 93.7 |

As is apparent from Table 2, the packaged beverage according to the present invention was stable since it showed no reduction in the content of non-polymer catechins even when stored for a long period of time under the condition of 55°C. Here, the residual ratio of non-polymer catechins is the ratio of the content of non-polymer catechins after the storage relative to the initial content thereof, expressed in mass percentages.

### Examples 3 to 6 and Comparative Examples 3 to 6

Acidic beverages (pH: 3.4 to 3.5) were prepared according to the formulations in Table 3 and the catechin preparation compositions in Table 4 and subjected to sterilization treatment in the same way as in Example 1.

**[Table 3]**

| | (g) |
|---|---|
| Raw Material Names | |
| Catechin Preparations | Described in Table 4 |
| Sweetener, Saccharide | 1.20 |
| Flavoring, Acidulant | 0.50 |
| Ascorbic Acid | 0.05 |
| Common Salt | 0.10 |
| Fruit Juice | 0.10 |
| Ion-exchange Water | Balance |
| Total Amount | 100.00 |

The resultant beverages were each package in a transparent glass container. Each container was stored at 55°C for 6 days, and the content of non-polymer catechins in the beverage was measured with the passage of days. The results are shown in Table 4.

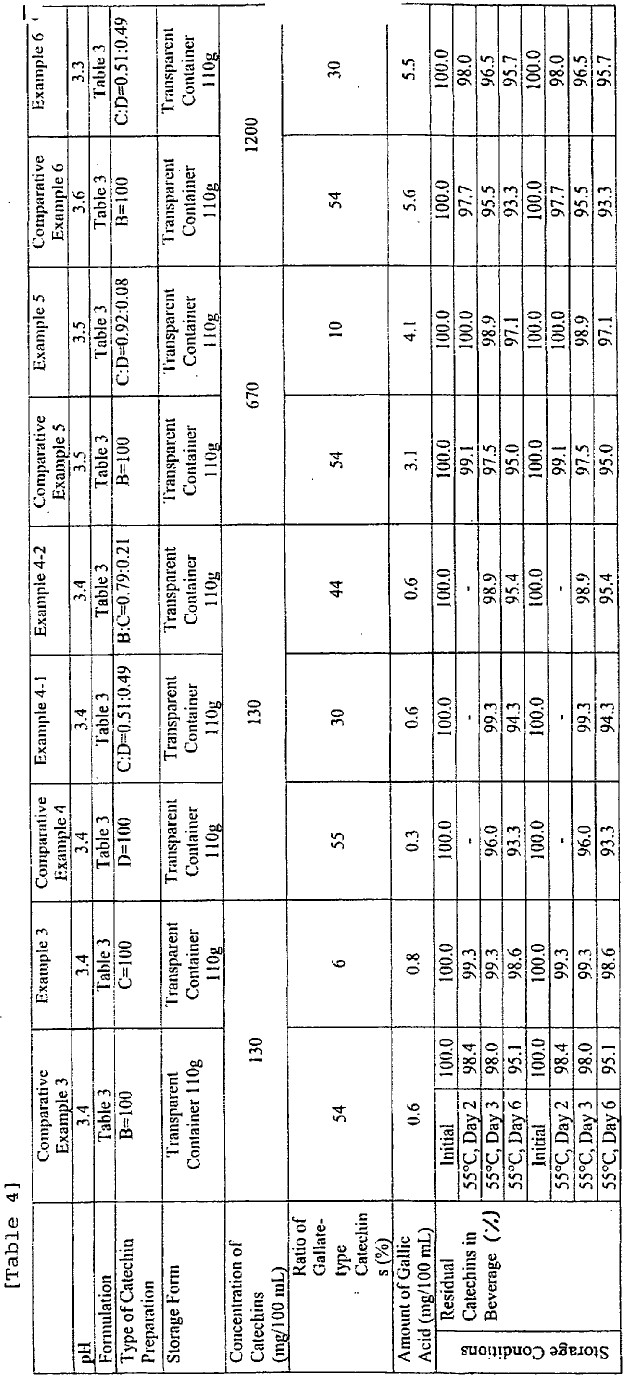

As is apparent from Table 4, the packaged beverages according to the present invention were stable since they showed no reduction in the content of non-polymer catechins even when stored for a long period of time under the condition of 55°C.

### Examples 7 to 9 and Comparative Examples 7 to 9

Neutral beverages (pH 6.0) were prepared according to the formulations in Table 5 and subjected to sterilization treatment in the same way as in Example 1.

**[Table 5]**

| | (g) |
|---|---|
| Raw Material Names | |
| Catechin Preparations | Described in Table 6 |
| Sweetener, Saccharide | 1.20 |
| Flavoring, Acidulant | 0.50 |
| Sodium Ascorbate Na | 0.05 |
| Common Salt | 0.10 |
| Fruit Juice | 0.10 |
| Ion-exchange Water | Balance |
| Total Amount | 100.00 |

The resultant beverages were each packaged in a transparent glass container. Each container was stored at 55°C for 6 days, and the content of non-polymer catechins in the beverage was measured with the passage of days. The results are shown in Table 6.

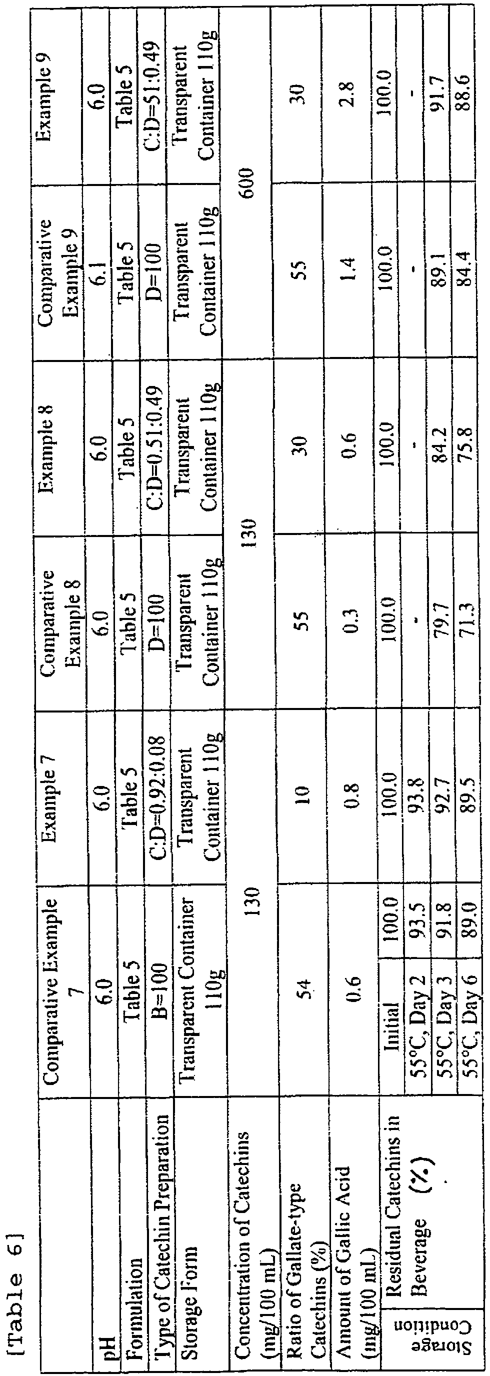

As is apparent from Table 6, the packaged beverages according to the present invention were stable since they showed no reduction in the content of non-polymer catechins even when stored for a long period of time under the condition of 55°C.

## Claims

1. A packaged non-tea beverage, comprising a purified green tea extract having a ratio of gallate-type catechins in non-polymer catechins of less than 50% by mass, wherein said beverage contains:
(A) 0.072 to 1.2% by mass of non-polymer catechins and
(B) 0.1 to 9 mg/100 mL of gallic acid.

2. The packaged non-tea beverage according to claim 1, further containing 0.005 to 20% by mass of a sweetener and 0.01 to 5% by mass of a flavoring.

3. The packaged non-tea beverage according to claim 1 or claim 2, wherein said beverage has a pH of 2 to 6.

4. The packaged non-tea beverage according to any of claims 1 to 3, wherein the container used for said package is a transparent container.

## Patentansprüche

1. Verpacktes Nicht-Tee-Getränk, das ein gereinigtes Grünteeextrakt mit einem Anteil von Catechinen vom Gallattyp in den nicht-polymeren Catechinen von weniger als 50 Massen%, worin das Getränk enthält:
(A) 0,072 bis 1,2 Massen% nicht-polymere Catechine und
(B) 0,1 bis 9 mg/100 ml Gallussäure.

2. Verpacktes Nicht-Tee-Getränk gemäß Anspruch 1, das weiterhin 0,005 bis 20 Massen% eines Süßungsmittels und 0,01 bis 5 Massen% eines Aromas enthält.

3. Verpacktes Nicht-Tee-Getränk gemäß Anspruch 1 oder 2, worin das Getränk einen pH-Wert von 2 bis 6 hat.

4. Verpacktes Nicht-Tee-Getränk gemäß irgendeinem der Ansprüche 1 bis 3, worin der Behälter für die Verpackung ein transparenter Behälter ist.

## Revendications

1. Boisson conditionnée autre que le thé, comprenant un extrait de thé vert purifié ayant un rapport de catéchines de type gallate dans les catéchines non polymères inférieur à 50% en masse, où ladite boisson contient :
(A) 0,072 à 1,2% en masse de catéchines non polymères et
(B) 0,1 à 9 mg/100 mL d'acide gallique.

2. Boisson conditionnée autre que le thé selon la revendication 1, contenant en outre 0,005 à 20% en masse d'un édulcorant et 0,01 à 5% en masse d'un agent aromatisant.

3. Boisson conditionnée autre que le thé selon la revendication 1 ou 2, dans laquelle ladite boisson a un pH allant de 2 à 6.

4. Boisson conditionnée autre que le thé selon l'une des revendications 1 à 3, dans laquelle le récipient utilisé pour ledit conditionnement est un récipient transparent.
